# EUROPEAN PATENT APPLICATION

(11) **EP 3 002 669 A1**
(43) Date of publication of application: **06.04.2016**
(21) Application number: 14186936.2
(22) Date of filing: 30.09.2014
(51) Int. Cl.: G06F 3/0488, G06F 1/16, G06F 3/01, G06F 3/0346

(54) **System and method for controlling a virtual input interface**

(71) Applicant: Advanced Digital Broadcast S.A., 1292 Geneva (CH)
(72) Inventor: Skowronski, Zbigniew, 65-119 Zielona Gora (PL); Szajdecki, Andrzej, 65-119 Zielona Gora (PL)
(74) Representative: Blonski, Pawel

(57) **Abstract**

A method for controlling a virtual input interface in a device comprising a touchscreen, the method comprising the steps of: displaying virtual input interface comprising a plurality of commands; awaiting a change in device's orientation in 3D space; determining the change type the method further comprising the steps of: executing a command present in the virtual input interface based on that determination step; updating the displayed virtual input interface to reflect the executed command.

## Description

The present invention relates to a system and method for controlling a virtual input interface. In particular the present invention relates to controlling input modes of for example a virtual keyboard.

Prior art defines virtual keyboards in mobile devices, that respond to rotating the device by approximately 90 degrees in approximately Y axis so that the layout of the keyboard changes from a narrow arrangement to a wide arrangement and vice versa.

There still however exists a problem of pressing right keys of the virtual keyboard, especially on mobile phones where the keys are relatively small. Further, due to size dimensions of mobile devices only a section of a full keyboard is displayed on the touch-screen at a time. This leads to a frequent need of changing the virtual keyboard input mode.

It would be advantageous to improve the usability of virtual input interfaces so that inputting commands via these interfaces is more accurate and does not lead to frequent changes to commands already input.

The aim of the development of the present invention is an improved accuracy system and method for controlling virtual input interface.

### SUMMARY AND OBJECTS OF THE PRESENT INVENTION

An object of the present invention is a method for controlling a virtual input interface in a device comprising a touch-screen, the method comprising the steps of: displaying virtual input interface comprising a plurality of commands; awaiting a change in device's orientation in 3D space; determining the change type the method further comprising the steps of: executing a command present in the virtual input interface based on that determination step; updating the displayed virtual input interface to reflect the executed command.

Preferably, the command is a command switching to lowercase or uppercase letters.

Preferably, the command is a backspace or enter command.

In one aspect of the invention, the command is a command switching to a special characters input mode or digits characters input mode.

Preferably, the change in device's orientation in 3D space is a tilt of the device in an axis.

Preferably, the change in device's orientation in 3D space is a motion of the device in one axis.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

These and other objects of the invention presented herein, are accomplished by providing a system and method for controlling virtual input interface. Further details and features of the present invention, its nature and various advantages will become more apparent from the following detailed description of the preferred embodiments shown in a drawing, in which:
Fig. 1 presents a diagram of the system according to the present invention;
Fig. 2 presents a diagram of the method according to the present invention;
Figs. 3A-B present a first example of the invention in practice;
Figs. 4A-B present a second example of the invention in practice; and
Figs. 5A-B present a third example of the invention in practice.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DESCRIPTION OF EMBODIMENTS

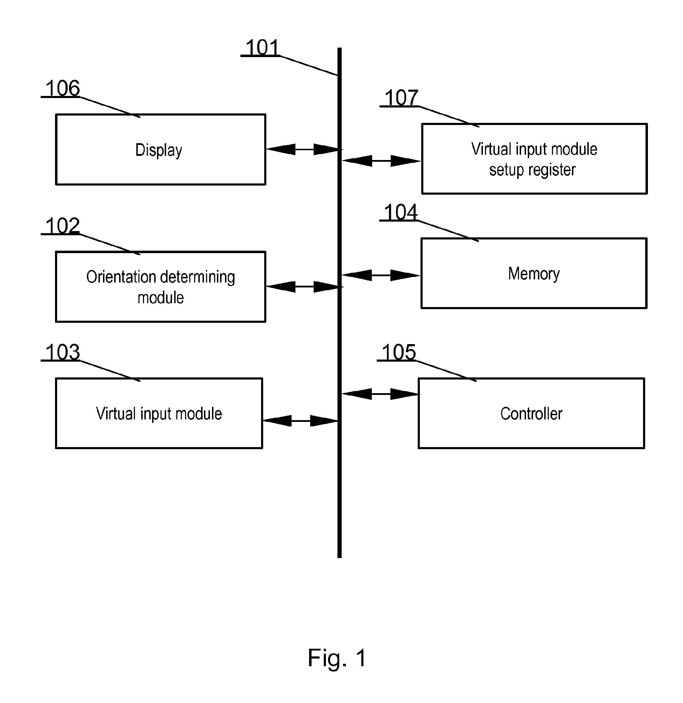

Fig. 1 presents a diagram of the system according to the present invention. The system is preferably included in a tablet or smartphone.

The system may be realized using dedicated components or custom made FPGA or ASIC circuits. The system comprises a data bus 101 communicatively coupled to a memory 104 module. Additionally, other components of the system are communicatively coupled to the system bus 101 so that they may be managed by a controller 106.

The memory 104 may store computer program or programs executed by the controller 105 in order to execute steps of the method according to the present invention.

The system includes a display 106 (preferably a touch-screen) and a virtual input module 103 for example a virtual keyboard. The virtual input module 103 operates according to a configuration stored in a virtual input module setup register 107. Such a register provides information on configuration of commands of the virtual input.

Additionally, there is present an orientation determining module 102, such as a gyroscope module, for determining orientation of the device in a three-dimensional space. Motion sensors, such as inertial sensors like accelerometers can also be used in handheld electronic devices.

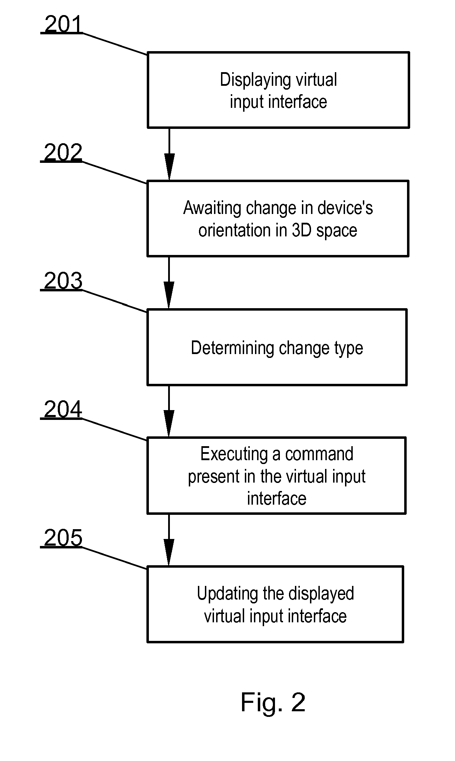

Fig. 2 presents a diagram of the method according to the present invention. The method starts at step 201 from displaying a virtual input interface comprising a plurality of commands, for example a keyboard for a horizontal arrangement of a device (i.e. the highest-dimension, lower edge of the device being substantially horizontal). The displayed virtual input interface presents different commands, for example in case of a typical QWERTY keyboard, such commands are digits input buttons, letters input buttons, backspace button, configuration buttons such as uppercase/lowercase or special characters button.

Subsequently, at step 202, the system awaits change in device's orientation in 3D space. The change of orientation is preferably a tilt left, right, up or down. Next, at step 203, the change type of step 202 is determined and based on that determination, at step 204, there is executed a command present in the virtual input interface. Therefore the present invention does not relate to a typical keyboard layout change in response to a rotation of the device, because such layout change is not a command present in the virtual input interface.

Finally, at step 205, there is executed updating the displayed virtual input interface to reflect the executed command.

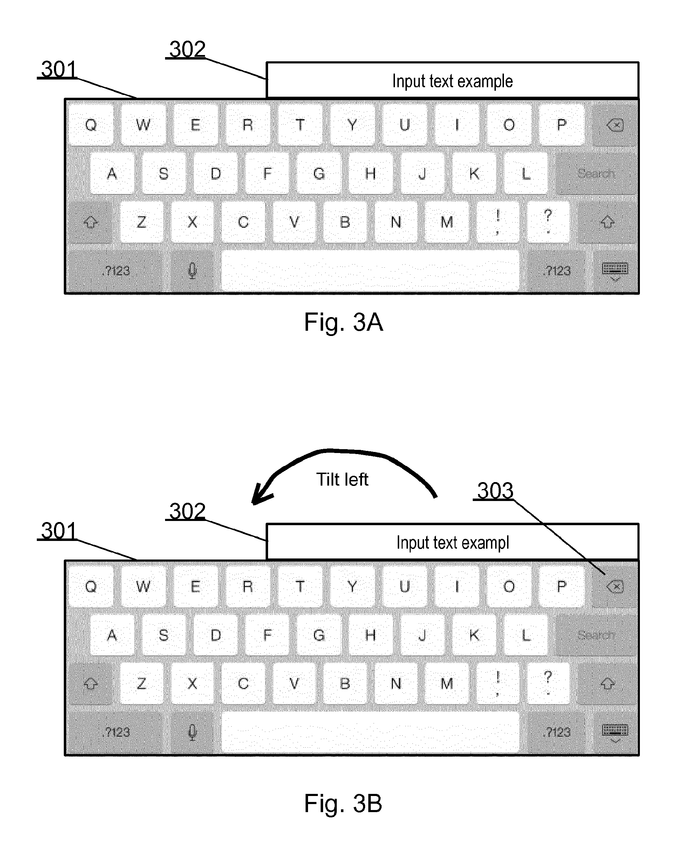

Figs. 3A-B present a first example of the invention in practice. A virtual keyboard 301 is displayed, as shown in Fig. 3A, with a text input field 302 comprising some entered text. After the device has been tilted left, the associated command of backspace may be executed (or any other displayed command of the virtual keyboard). This results in that the last character 'e' is deleted from the text input field 302 as shown in Fig. 3B.

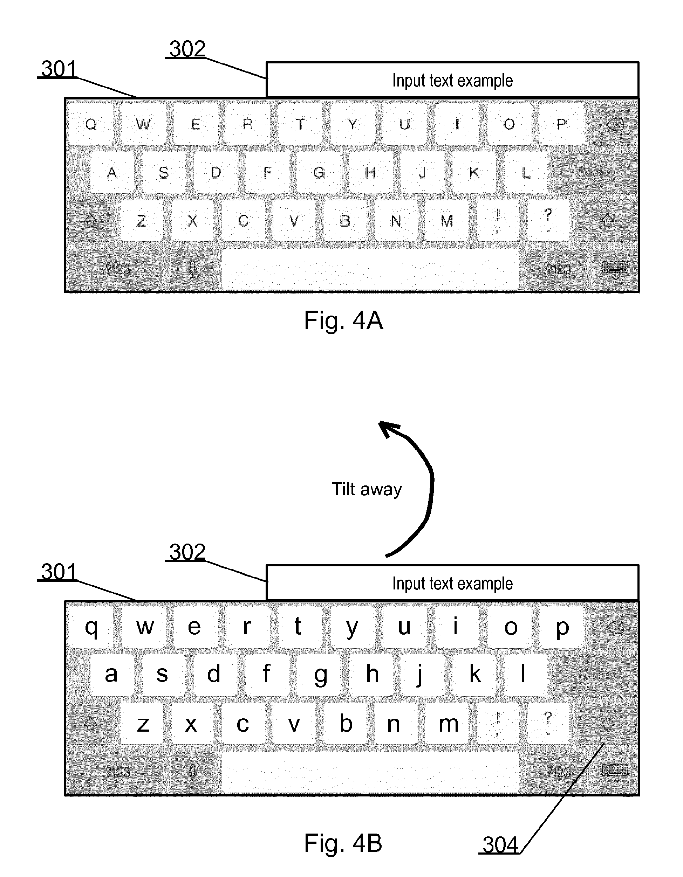

Figs. 4A-B present a second example of the invention in practice. A virtual keyboard 301 is displayed in Fig. 4A with a text input field 302 comprising some entered text. After the device has been tilted away the associated command of lowercase letters 304 may be executed (or any other displayed command of the virtual keyboard). This results in that the characters of the keyboard appear lowercase as shown in Fig. 4B.

Other input commands are possible, for example tilting the device towards the user may display special characters layout while tilting the device right may display numerical characters. In another embodiment each tilt right may switch between letters and digital layout while similarly each tilt towards the user may switch between special characters layout and normal characters layout.

Naturally, a tilt may be defined as change in orientation that is greater in a given axis than in other axes. Different orientation change thresholds may be defined that will be interpreted as a tilt in a given direction. In addition to orientation changes, in another embodiment a motion along a single axis may be checked. For example, movement in Z axis with respect to the display 106 may invoke a command of the virtual keyboard.

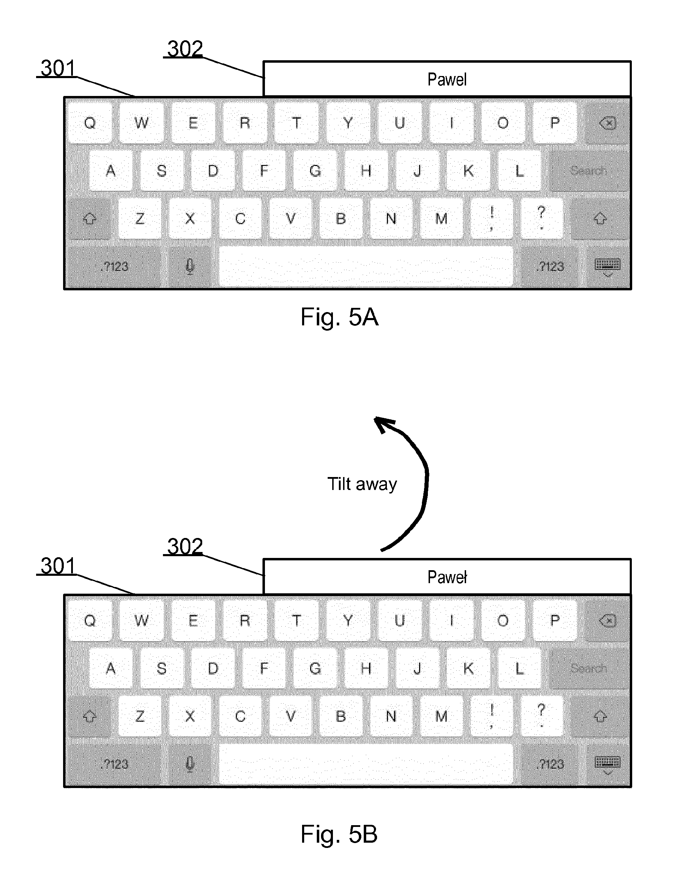

Figs. 5A-B present a third example of the invention in practice. A virtual keyboard 301 is displayed in Fig. 5A with a text input field 302 comprising entered text of "Pawel". After the device has been tilted away the associated command of native language letters may be executed (or any other displayed command of the virtual keyboard). This results in that the last input letter 'I' is modified into a polish language native letter 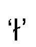 as shown in Fig. 5B.

The invention relates to commands input via a virtual input interface presented on a device such as a tablet or smartphone. It is aimed at accuracy of input and speed of input. Therefore, the presented invention provides a useful, concrete and tangible result.

The invention will preferably be implemented in tablets and smartphones and provides processing of user commands that are entered by physically orienting the device in a three-dimensional space. Thus, the machine or transformation test is fulfilled and that the idea is not abstract.

It can be easily recognized, by one skilled in the art, that the aforementioned method for controlling virtual input interface may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory or volatile memory, for example RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for controlling a virtual input interface in a device comprising a touch-screen, the method comprising the steps of:
• displaying virtual input interface (201) comprising a plurality of commands;
• awaiting a change in device's orientation in 3D space (202);
• determining the change type (203)
the method being **characterized in that** it further comprises the steps of:
• executing a command (204) present in the virtual input interface based on that determination step;
• updating (205) the displayed virtual input interface to reflect the executed command.

2. The method according to claim 1 **characterized in that** the command is a command switching to lowercase or uppercase letters.

3. The method according to claim 1 **characterized in that** the command is a backspace or enter command.

4. The method according to claim 1 **characterized in that** the command is a command switching to a special characters input mode or digits characters input mode.

5. The method according to claim 1 **characterized in that** the change in device's orientation in 3D space is a tilt of the device in an axis.

6. The method according to claim 1 **characterized in that** the change in device's orientation in 3D space is a motion of the device in one axis.

7. A computer program comprising program code means for performing all the steps of the computer-implemented method according to claim 1 when said program is run on a computer.

8. A computer readable medium storing computer-executable instructions performing all the steps of the computer-implemented method according to claim 1 when executed on a computer.

9. A system for controlling a virtual input interface configured to be presented on a touch-screen (106), the system comprising:
• a data bus (101) communicatively coupled to a memory (104);
• a controller (105) communicatively coupled to the data bus (101);
• an orientation determining module (102) configured to determine orientation of the device in a three-dimensional space;
the system being **characterized in that**
• the controller (105) is configured to execute all steps of the method according to claim 1.
